# EUROPÄISCHE PATENTSCHRIFT

(11) **EP 2 734 335 B1**
(45) Veröffentlichungstag und Bekanntmachung des Hinweises auf die Patenterteilung: **04.05.2016**
(21) Anmeldenummer: 12735282.1
(22) Anmeldetag: 11.07.2012
(51) Int. Cl.: B25B 13/48, F16B 39/32, B25B 15/00, F16B 23/00

(54) **VORRICHTUNG ZUM LÖSEN EINER SICHERUNGSSCHRAUBE FÜR EINE EINHEIT IN EINEM GEHÄUSE**
DEVICE FOR RELEASING A LOCKING SCREW IN A HOUSING UNIT
DISPOSITIF POUR LIBERER UNE VIS DE BLOCAGE

(30) Priorität: 20.07.2011 DE 102011051960
(43) Veröffentlichungstag der Anmeldung: 28.05.2014
(73) Patentinhaber: Robert Bosch Automotive Steering GmbH, 73527 Schwäbisch Gmünd (DE)
(72) Erfinder: RAAB, Andreas, 73491 Neuler (DE); STAHL, Andreas, 73441 Bopfingen (DE)
(86) Internationale Anmeldenummer: PCT/EP2012/063537
(87) Internationale Veröffentlichungsnummer: WO 2013/010863

(56) Entgegenhaltungen:
- WO-A1-2009/001421
- DE-A1- 3 935 753
- GB-A- 191 316 625
- US-A1- 2005 220 569

## Beschreibung

Die Erfindung betrifft eine Vorrichtung zur Sicherung einer Einheit in einem Gehäuse und ein Werkzeug zum Lösen einer Sicherungsschraube für eine Einheit in einem Gehäuse, insbesondere eines Ritzels in einem Lenkgetriebe eines Kraftfahrzeuges.

Bekannte Lagesicherungen erfolgen über Schraubenverbindungen, z. B. Stahlschrauben, mit metrischem Gewinde. Die Schraubensicherung wird dabei kraftschlüssig über ein Anziehdrehmoment, über eine Verstemmung oder über eine Klebeverbindung erreicht. Eine Fixierung z. B. eines Lagers erfolgt bei bekannten Sicherungen z. B. mit Hilfe einer Zink-Druckguss-Stellschraube, die nach einem definierten Anzugsmoment mit Hilfe eines Verstemmprozesses in ihrer Lage fixiert wird.

In der DE 39 35 753 A1 wird eine Arretiervorrichtung für eine in eine Gewindebohrung versenkte Stellschraube mit einem Gewindeschaftteil und einem Kopfteil offenbart, wobei an dem Umfang des Kopfteils zumindest ein radial nach außen vorgespanntes Rastorgan vorgesehen ist, das sich zum Zwecke einer Verdrehsicherung an einer Gehäusewand der Gewindebohrung abstützt.

Ein Problem dabei liegt jedoch in der Verwendung von Werkstoffen mit unterschiedlichen Wärmeausdehnungskoeffizienten, wodurch sich die Sicherungswirkung über die Lebensdauer verringert, beziehungsweise sogar ein Spiel entstehen kann. Das Setzverhalten des Werkstoffes der Stellschraube gegenüber dem Gehäusewerkstoff beeinflusst eine Sicherung bzw. Fixierung ebenfalls negativ. Nachteilig ist auch, dass die Stellschraube über einen gesonderten Arbeitsgang in dem Gehäuse in ihrer Lage fixiert werden muss. Dadurch dass die Vorspannung der Stellschraube über die Laufzeit unter Umständen bis auf Null absinkt, kann es zu einem Spiel zwischen der zu sichernden Einheit, z. B. einem Festlager, und der Stellschraube bzw. dem Gehäuse kommen. Daraus resultiert ein Reibverschleiß und es können Akustikprobleme auftreten.

Zur Abdichtung gegenüber äußeren Medien wird häufig ein Gewindedichtmittel verwendet, wodurch der Herstell- und/oder Montageprozess ebenfalls aufwendiger wird.

Der vorliegenden Erfindung liegt daher die Aufgabe zugrunde, eine kostengünstige und montagefreundliche Vorrichtung zur Sicherung einer Einheit zu schaffen, wobei eine spielfreie Fixierung über die Lebensdauer gegeben sein soll und bei Bedarf die Sicherung auch wieder gelöst werden kann.

Erfindungsgemäß wird diese Aufgabe durch die in Anspruch 1 genannten Merkmale gelöst.

Durch die erfindungsgemäße Ausbildung der Sicherungsvorrichtung mit einer Sicherungsschraube, die mit Rasthebel versehen ist, wobei die Sicherungsschraube mit ihrem Außengewinde mit einem Innengewinde im Gehäuse zusammen arbeitet und im Gehäuse Rastnasen der Rasthebel einrasten können, wird sichergestellt, dass auch bei unterschiedlichen Wärmeausdehnungskoeffizienten eine Spielfreiheit und damit eine sichere Fixierung der Einheit, z. B. einem Festlager, erreicht wird.

Zum Lösen der Rastnasen der Rasthebel aus ihrer Raststellung mit einer radial nach innen gerichteten Bewegung der Rasthebel ist ein mit der Rasteinrichtung verbindbares Werkzeug vorgesehen, bei dessen Einsatz die Rasthebel nach innen verschoben werden, wonach die Sicherungsschraube gelöst werden kann.

Eine vorteilhafte Ausführungsform zum Lösen der Rasthebel aus ihrer Raststellung besteht darin, dass in den Verzahnungslücken jeweils die äußere Umfangswand mit einer nach innen gerichteten Abschrägung versehen ist. Entlang der Abschrägung werden dann die Rasthebel radial nach innen geschwenkt.

Hierzu kann weiterhin vorgesehen sein, dass die Rastnasen an ihren Unterseiten am Außenumfang jeweils mit einer Fase oder Abschrägung versehen sind, wodurch das Lösen und Einschwenken der Rasthebel erleichtert wird.

In einer vorteilhaften Ausbildung der Erfindung ist vorgesehen, dass die Sicherungsschraube wenigstens im Bereich der Rasteinrichtung als Hohlschraube in Form eines Vieleckes ausgebildet ist, in die das Werkzeug zum Lösen einsteckbar ist.

Durch eine derartige Ausgestaltung ist es lediglich erforderlich, das Werkzeug in das Vieleck einzustecken und es danach anschließend axial auf die Rasthebel zu drücken, wonach die Rasthebel aufgrund der nach innen gerichteten Abschrägung aus der Verzahnungsgeometrie freikommen.

Besonders vorteilhaft lässt sich die Erfindung bei einer Herstellung der Sicherungsschraube aus einem Kunststoffkörper einsetzen.

Weitere vorteilhafte Ausgestaltungen und Weiterbildungen ergeben sich aus den Unteransprüchen und aus dem nachfolgend anhand der Zeichnung prinzipmäßig beschriebenen Ausführungsbeispiel.

Es zeigt:

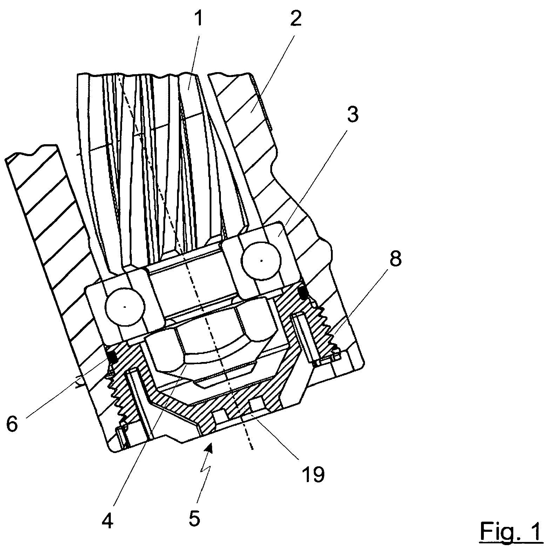

Fig. 1 ausschnittsweise ein Lenkgetriebe eines Kraftfahrzeuges mit der erfindungsgemäßen Lagerung und Sicherung des Ritzels durch eine Sicherungsschraube;

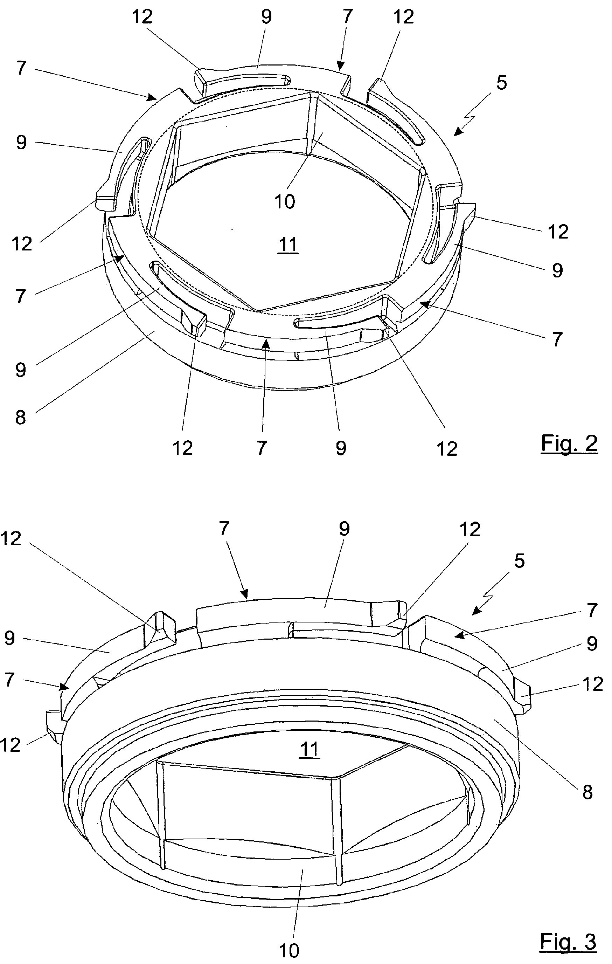

Fig. 2 eine dreidimensionale Darstellung der erfindungsgemäßen Vorrichtung mit der Sicherungsschraube und einer Rasteinrichtung;
Fig. 3 eine dreidimensionale Darstellung der erfindungsgemäßen Vorrichtung mit der Sicherungsschraube und der Rasteinrichtung in einer Ansicht von unten;
Fig. 4 einen Axialschnitt durch die erfindungsgemäße Vorrichtung;
Fig. 5 ausschnittsweise eine Vergrößerung der Verzahnungsgeometrie im Gehäuse des Lenkgetriebes für die Rasthebel der Sicherungsschraube;
Fig. 6 das erfindungsgemäße Werkzeug zum Lösen der Sicherungsschraube in dreidimensionaler Darstellung (teilweise im Schnitt);
Fig. 7 einen Längsschnitt durch das Werkzeug kurz vor dem Aufsetzen auf die Rasthebel;
Fig. 8 einen Längsschnitt durch das Werkzeug, wobei die Rastnasen durch das Werkzeug nach unten und radial nach innen gedrückt sind; und
Fig. 9 ausschnittsweise eine vergrößerte Darstellung der Fig. 8 mit einer nach unten und radial nach innen gedrückten Rastnase.

Nachfolgend wird die Erfindung beispielsweise für einen Einsatz der Vorrichtung mit einer Sicherungsschraube in einem Lenkgetriebe eines Kraftfahrzeuges beschrieben, wobei ein Ritzel über ein Festlager in einem Getriebegehäuse gelagert ist.

Selbstverständlich lässt sich die erfindungsgemäße Vorrichtung jedoch auf den verschiedensten Gebieten einsetzen, wobei eine kostengünstige, sichere und montagefreundliche Sicherungsvorrichtung für ein Lager, eine Führungsbuchse, eine Lagerbuchse, ein Zahnrad oder ein sonstiges Getriebeteil, eine Stellschraube für ein Druckstück für eine Zahnstange in einem Lenkgetriebe und ähnliche Anwendungsfälle, gewünscht wird und wobei eine Einrichtung zum Lösen der Sicherungsschraube bei Bedarf vorgesehen sein soll.

Da Lenkgetriebe für Kraftfahrzeuge mit einem Ritzel und einer Zahnstange allgemein bekannt sind, wozu beispielsweise auf die DE 10 2004 017 259 A1 verwiesen wird, wird nachfolgend nur auf die für die Erfindung wesentlichen Teile näher eingegangen.

Ein Ritzel 1 ist in einem Getriebegehäuse 2 über ein Festlager 3 gelagert. Das Ritzel ist in bekannter Weise mit einem Lenkhandrad (nicht dargestellt) und einer ebenfalls nicht dargestellten Zahnstange zur Umsetzung der Drehbewegung in eine Linearbewegung verbunden. Zur Sicherung des Ritzels 1 mit dem Innenring des Festlagers 3 dient eine auf die Ritzelnabe aufgeschraubte Mutter 4.

Zur Sicherung und Fixierung des Außenringes des Festlagers 3 ist erfindungsgemäß eine Sicherungsschraube 5 vorgesehen, die aus einem Kunststoffkörper als Hohlschraube besteht.

Ein Dichtring 6 in einer Ringnut der Sicherungsschraube 5 übernimmt eine Dichtfunktion.

Axialkräfte, welche über das Ritzel 1 und das Festlager 3 entstehen, müssen spielfrei aufgenommen werden. Über das selbsthemmende Außengewinde 8 der Sicherungsschraube 5 werden die Kräfte dann in das Getriebegehäuse 2 eingeleitet.

Die Schraubensicherung besteht aus einer radialen nachstellenden Rasteinrichtung 7. Die Rasteinrichtung für die Sicherungsschraube 5 weist an ihrem Umfang mehrere Rasthebel 9 auf, die jeweils im Bereich eines Endes der Rasthebel 9 mit einem Mittelstück 10 der Sicherungsschraube 5 verbunden sind. Das Mittelstück 10 der Sicherungsschraube 5 weist eine Sechskantbohrung 11 auf. Bei dem Ausführungsbeispiel sind sechs Rasthebel 9 über den Umfang verteilt angeordnet. Selbstverständlich sind jedoch auch andere Anzahlen im Rahmen der Erfindung möglich.

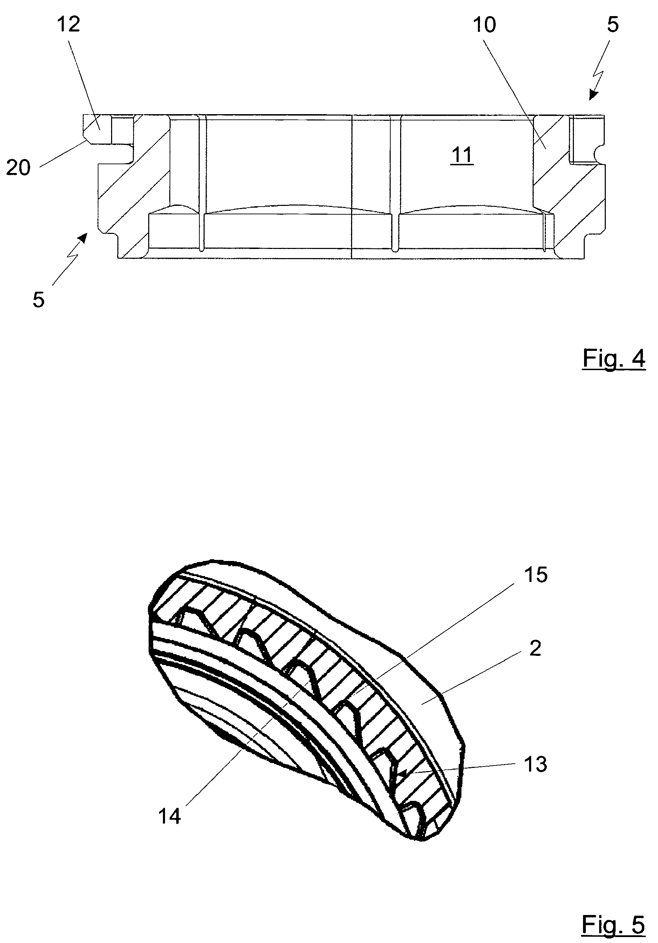

Die Rasthebel 9 der Rasteinrichtung 7 sind mit Rastnasen 12 an ihren freien Enden versehen. Die Rastnasen 12 der Rasthebel 9 rasten in einer Verzahnungsgeometrie 13 im Getriebegehäuse 2 ein (siehe insbesondere die vergrößerte Darstellung der Verzahnungsgeometrie in der Fig. 5). Durch das Einrasten der Rastnasen 12 in die Verzahnungsgeometrie 13 des Getriebegehäuses 2 wird ein selbständiges Aufdrehen der Sicherungsschraube 5 verhindert.

Beim Eindrehen der Sicherungsschraube 5 in das Getriebegehäuse 2 werden die Rasthebel 9 radial ausgelenkt und schnappen bei Erreichen des vorbestimmten Drehmomentes in Verzahnungslücken 14 der Verzahnungsgeometrie 13 ein. Ein Rückdrehen der Sicherungsschraube 5 wird über die sägeförmige Kontur der Verzahnungsgeometrie 13 verhindert. Die Rastnasen 12 stützen sich hierzu an Anlageflächen 15 in den Verzahnungslücken 14 der Verzahnungsgeometrie 13 ab.

Die Sicherungsschraube 5 in Ausbildung aus einem Kunststoffkörper kann beispielsweise aus einem faserverstärkten Thermoplast als Spritzgussteil ausgebildet sein, der sich durch ein temperaturbeständiges Verhalten auszeichnet.

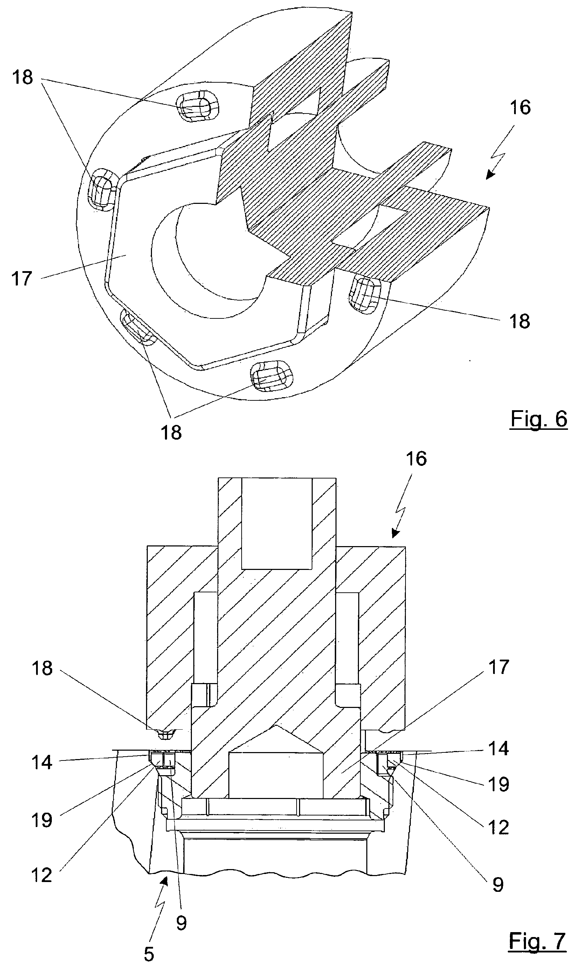

Figur 6 zeigt ein Werkzeug 16 zum Lösen der Sicherungsschraube 5. Hierzu besitzt das Werkzeug 16 einen Vorsprung in Sechskantform 17. Die Sechskantform 17 entspricht dabei der Sechskantbohrung 11 in der Sicherungsschraube 5, damit das Werkzeug exakt und bündig mit der Sicherungsschraube 5 verbunden werden kann.

Sollte die Sicherungsschraube 5 eine andere Mehrkantbohrung als eine Sechskantbohrung 11 aufweisen, so richtet sich der Vorsprung des Werkzeugs 16 entsprechend an dieser Mehrkantbohrung aus.

Auf der der Sicherungsschraube 5 zugewandten Stirnseite des Werkzeugs 16 befinden sich Ansätze bzw. Stempel 18, deren Anzahl ebenfalls der Anzahl der Rasthebel 9 der Sicherungsschraube 5 entspricht.

Aus den Figuren 7 bis 9 ist die Funktionsweise des Werkzeugs 16 zum Lösen der Rastnasen 12 aus der Verzahnungsgeometrie 13 des Getriebegehäuses 2 ersichtlich.

Hierzu zeigt die Figur 7 das Werkzeug 16, wie es mit seinem Vorsprung 17 in die Sechskantbohrung 11 der Sicherungsschraube 5 eingesetzt ist. Die Stempel 18 sind jedoch noch nicht in Kontakt mit den Rasthebeln 9.

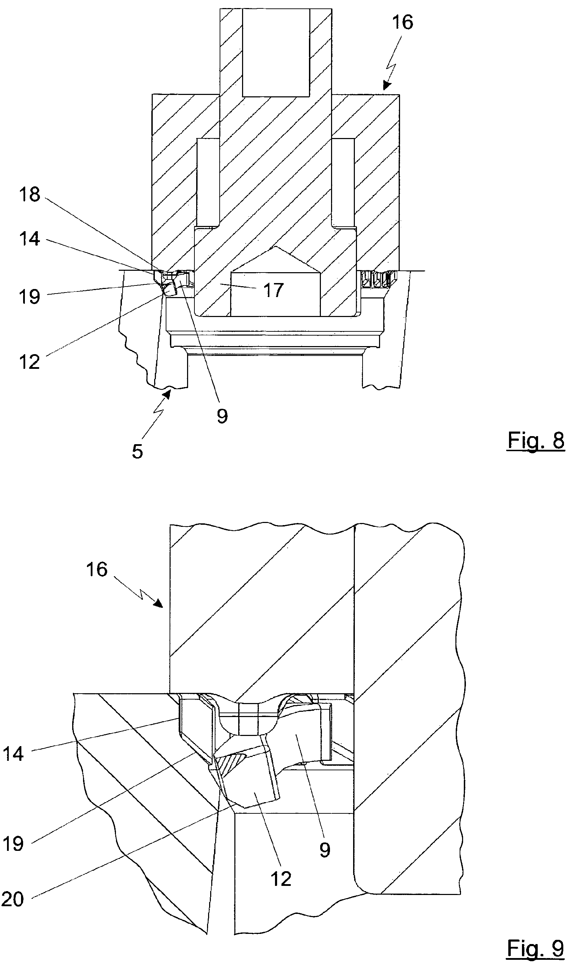

Die Figur 8 zeigt das Werkzeug 16, wie es beim weiteren Einschieben in die Sechskantbohrung 11 mit den Stempeln 18 auf die Rasthebel 9 drückt. Wie ersichtlich, sind in den Verzahnungslücken 14 die äußeren Umfangswände 19 mit einer radial nach innen gerichteten Abschrägung in ihren unteren Bereichen versehen. Drückt nun das Werkzeug 16 mit den Stempeln 18 auf die Rasthebel 9, so werden die Rastnasen 12 und damit die Rasthebel 9 nach unten und nach innen in Richtung zur Längsachse der Sicherungsschraube 5 gedrückt und kommen damit außer Eingriff mit der Verzahnungsgeometrie 13. Anschließend kann die Sicherungsschraube 5 zum Lösen aus der Gewindeverbindung mit dem Getriebegehäuse 2 herausgeschraubt werden.

Um das Herausdrücken der Rastnasen 12 aus den Verzahnungslücken 14 zu erleichtern, können die Rastnasen 12 ebenfalls auf ihren Unterseiten am Außenumfang jeweils mit einer Fase 20 oder Abschrägung versehen sein (siehe vergrößerte Darstellung in der Figur 9).

Das Gewinde des Kunststoffkörpers der Sicherungsschraube 5 kann als metrisches Spitzengewinde ausgeführt sein, wobei der Flankendurchmesser des Gewindes so ausgelegt wird, dass nur ein geringes Gewindespiel vorhanden ist.

Selbstverständlich sind im Rahmen der Erfindung auch andere Gewindeformen wie z. B. ein konisches Gewinde möglich. Die Innenverzahnung im Getriebegehäuse 2 und ebenso auch die Verzahnungsgeometrie 13 können fertig gegossen sein.

Die Erfindung wurde anhand einer Sicherungsschraube für eine Ritzeleinheit in einem Lenkgetriebe eines Kraftfahrzeugs beschrieben, aber selbstverständlich ist sie auch auf anderen Gebieten einsetzbar, wobei eine Sicherungsschraube wieder lösbar sein soll. Dies betrifft z. B. Sicherungsschrauben für Lager aller Art, für Zahnräder, Wellen und dgl.

Anstelle einer Wiederlösung einer Sicherungsschraube kann die erfindungsgemäße Vorrichtung selbstverständlich auch zum Lösen von beliebigen Teilen oder Einrichtungen aus einer Raststellung verwendet werden.

### Bezugszeichenliste

- 1: Ritzel
- 2: Getriebegehäuse
- 3: Festlager
- 4: Mutter
- 5: Sicherungsschraube
- 6: Dichtring
- 7: Rasteinrichtung
- 8: Außengewinde
- 9: Rasthebel
- 10: Mittelstück
- 11: Sechskantform
- 12: Rastnase
- 13: Verzahnungsgeometrie
- 14: Verzahnungslücken
- 15: Anlagefläche
- 16: Werkzeug
- 17: Vorsprung / Sechskantform
- 18: Stempel
- 19: Abschrägung
- 20: Fase

## Patentansprüche

1. Vorrichtung zur Sicherung einer Einheit (3) in einem Gehäuse (2), insbesondere einer Ritzeleinheit (1) in einem Lenkgetriebe eines Kraftfahrzeuges, wobei die Einheit über eine Sicherungsschraube (5), über ein Außengewinde (8) mit einem Innengewinde im Gehäuse (2) verbunden ist, wobei die Sicherungsschraube (5) mit einer Rasteinrichtung (7) versehen ist, die am Umfang der Sicherungsschraube (5) verteilt angeordnete Rasthebel (9) aufweist, die jeweils mit an den freien Enden der Rasthebel angeordneten Rastnasen (12) versehen sind, wobei die Rastnasen (12) in Verzahnungslücken (14) einer Verzahnungsgeometrie (13) des Gehäuses (2) einrasten und wobei für die Rasteinrichtung (7) zum Lösen der Rasthebel (9) mit den Rastnasen (12) aus ihrer Raststellung eine radial nach innen gerichtete Bewegung der Rasthebel (9) durch ein mit der Rasteinrichtung (7) verbindbares Werkzeug (16) durchführbar ist, **dadurch gekennzeichnet, dass** in den Verzahnungslücken (14) jeweils die äußere Umfangswand (19) mit einer nach innen gerichteten Abschrägung versehen ist.

2. Vorrichtung nach Anspruch 1, **dadurch gekennzeichnet, dass** die Rastnasen (12) an ihren Unterseiten am Außenumfang jeweils mit einer Fase (20) oder Abschrägung versehen sind.

3. Vorrichtung nach einem der Ansprüche 1 bis 2, **dadurch gekennzeichnet, dass** die Sicherungsschraube (5) wenigstens im Bereich der Rasteinrichtung (7) als Hohlschraube in Form eines Vielecks (11) ausgebildet ist, in die das Werkzeug (16) zum Lösen einsteckbar ist.

4. Vorrichtung nach Anspruch 3, **dadurch gekennzeichnet, dass** die Anzahl der Ecken des Vielecks (11) der Anzahl der Rasthebel (9) entspricht.

5. Vorrichtung nach einem der Ansprüche 1 bis 4, **dadurch gekennzeichnet, dass** die Sicherungsschraube (5) mit den Rasthebeln (9) und Rastnasen (12) aus einem Kunststoffkörper gebildet ist.

6. Werkzeug zum Lösen einer Sicherungsschraube (5) für eine Einheit (3) in einem Gehäuse (2), insbesondere einer Ritzeleinheit (1) in einem Lenkgetriebe eines Kraftfahrzeuges, wobei die Sicherungsschraube (5) über ein Außengewinde (8) mit einem Innengewinde im Gehäuse (2) verbunden ist, wobei die Sicherungsschraube (5) mit einer Rasteinrichtung (7) versehen ist, die am Umfang der Sicherungsschraube (5) verteilt angeordnete Rasthebel (9) aufweist, die jeweils mit an den freien Enden der Rasthebel angeordneten Rastnasen (12) versehen sind, wobei die Rastnasen (12) in Verzahnungslücken (14) einer Verzahnungsgeometrie (13) des Gehäuses (2) einrasten, und wobei das Werkzeug (16) mit einem Vorsprung (17) und mit Stiften oder Stempeln (18) zum Eingriff mit der Rasteinrichtung (7) zum Lösen der Rastnasen (12) der Rasthebel (9) aus den Verzahnungslücken (14) der Verzahnungsgeometrie (13) versehen ist.

## Claims

1. Apparatus for securing a unit (3) in a housing (2), in particular a pinion unit (1) in a steering gear of a motor vehicle, wherein the unit is connected to an internal thread in the housing (2) by means of a securing screw (5), by means of an external thread (8), wherein the securing screw (5) is provided with a latching device (7) which has ratchet levers (9), which are arranged distributed on the circumference of the securing screw (5) and are provided in each case with latching lugs (12) which are arranged on the free ends of the ratchet levers, wherein the latching lugs (12) latch into toothing gaps (14) of a toothing geometry (13) of the housing (2) and wherein, for the latching device (7), a radially inwardly directed movement of the ratchet levers (9) by means of a tool (16), which can be connected to the latching device (7), can be carried out for releasing the ratchet levers (9) with the latching lugs (12) out of their latching position, **characterized in that** in the toothing gaps (14) the outer circumferential wall (19) is provided in each case with an inwardly directed bevel.

2. Apparatus according to Claim 1, **characterized in that** the latching lugs (12) are provided in each case with a chamfer (20) or bevel on their under surfaces on the outer circumference.

3. Apparatus according to one of Claims 1 to 2, **characterized in that** the securing screw (5) is realized at least in the region of the latching device (7) as a hollow screw in the form of a polygon (11), into which the tool (16) is insertable for the releasing operation.

4. Apparatus according to Claim 3, **characterized in that** the number of corners of the polygon (11) corresponds to the number of ratchet levers (9).

5. Apparatus according to one of Claims 1 to 4, **characterized in that** the securing screw (5) is formed with the ratchet levers (9) and latching lugs (12) from a plastics material body.

6. Tool for releasing a securing screw (5) for a unit (3) in a housing (2), in particular a pinion unit (1) in a steering gear of a motor vehicle, wherein the securing screw (5) is connected to an internal thread in the housing (2) by means of an external thread (8), wherein the securing screw (5) is provided with a latching device (7) which has ratchet levers (9), which are arranged distributed on the circumference of the securing screw (5) and are provided in each case with latching lugs (12) which are arranged on the free ends of the ratchet levers, wherein the latching lugs (12) latch into toothing gaps (14) of a toothing geometry (13) of the housing (2) and wherein the tool (16) is provided with a projection (17) and with pins or plungers (18) for engagement with the latching device (7) for releasing the latching lugs (12) of the ratchet levers (9) out of the toothing gaps (14) of the toothing geometry (13).

## Revendications

1. Dispositif pour fixer une unité (3) dans un boîtier (2), en particulier une unité de pignon (1) dans un mécanisme de transmission d'un véhicule automobile, l'unité étant connectée par le biais d'une vis de fixation (5), par le biais d'un filetage extérieur (8) à un filetage intérieur dans le boîtier (2), la vis de fixation (5) étant pourvue d'un dispositif d'encliquetage (7) qui présente des leviers d'encliquetage (9) disposés de manière répartie au niveau de la périphérie de la vis de fixation (5), lesquels sont pourvus à chaque fois d'ergots d'encliquetage (12) disposés aux extrémités libres des leviers d'encliquetage, les ergots d'encliquetage (12) s'encliquetant dans des vides de denture (14) d'une géométrie de denture (13) du boîtier (2) et, pour le dispositif d'encliquetage (7), afin de libérer les leviers d'encliquetage (9) avec les ergots d'encliquetage (12) hors de leur position d'encliquetage, un déplacement orienté radialement vers l'intérieur des leviers d'encliquetage (9) pouvant être effectué par un outil (16) pouvant être connecté au dispositif d'encliquetage (7), **caractérisé en ce que** la paroi périphérique extérieure (19) est à chaque fois pourvue d'un biseautage orienté vers l'intérieur dans les vides de denture (14).

2. Dispositif selon la revendication 1, **caractérisé en ce que** les ergots d'encliquetage (12) sont pourvus au niveau de leur côté inférieur à la périphérie extérieure à chaque fois d'un chanfrein (20) ou d'un biseautage.

3. Dispositif selon l'une quelconque des revendications 1 et 2, **caractérisé en ce que** la vis de fixation (5) est réalisée au moins dans la région du dispositif d'encliquetage (7) sous forme de vis. creuse en forme de polygone (11) dans laquelle peut être inséré l'outil (16) en vue de la libération.

4. Dispositif selon la revendication 3, **caractérisé en ce que** le nombre des coins du polygone (11) correspond au nombre des leviers d'encliquetage (9).

5. Dispositif selon l'une quelconque des revendications 1 à 4, **caractérisé en ce que** la vis de fixation (5) avec les leviers d'encliquetage (9) et les ergots d'encliquetage (12) est formée à partir d'un corps en plastique.

6. Outil pour libérer une vis de fixation (5) pour une unité (3) dans un boîtier (2), en particulier une unité de pignon (1) dans un mécanisme de transmission d'un véhicule automobile, la vis de fixation (5) étant connectée par le biais d'un filetage extérieur (8) à un filetage intérieur dans le boîtier (2), la vis de fixation (5) étant pourvue d'un dispositif d'encliquetage (7) qui présente des leviers d'encliquetage (9) disposés de manière répartie à la périphérie de la vis de fixation (5), lesquels sont à chaque fois pourvus d'ergots d'encliquetage (12) disposés aux extrémités libres des leviers d'encliquetage, les ergots d'encliquetage (12) s'encliquetant dans des vides de denture (14) d'une géométrie de denture (13) du boîtier (2), et l'outil (16) étant pourvu d'une saillie (17) et de goupilles ou de poinçons (18) pour l'engagement avec le dispositif d'encliquetage (7) pour libérer les ergots d'encliquetage (12) des leviers d'encliquetage (9) hors des vides de denture (14) de la géométrie de denture (13).
